# EUROPÄISCHE PATENTSCHRIFT

(11) **EP 2 011 624 B1**
(45) Veröffentlichungstag und Bekanntmachung des Hinweises auf die Patenterteilung: **05.01.2011**
(21) Anmeldenummer: 08010001.9
(22) Anmeldetag: 01.06.2008
(51) Int. Cl.: B29C 47/02, B29C 47/20, B29C 47/22, B29D 30/70

(54) **Ringextruder**
Ring extruder
Extrudeuse annulaire

(30) Priorität: 01.06.2007 DE 102007025507
(43) Veröffentlichungstag der Anmeldung: 07.01.2009
(73) Patentinhaber: VMI - AZ Extrusion GmbH, 93486 Runding (DE)
(72) Erfinder: Fischer, Florian W., 85560 Ebersberg (DE)
(74) Vertreter: Baronetzky, Klaus

(56) Entgegenhaltungen:
- EP-A- 0 468 261
- EP-A- 0 472 864
- GB-A- 2 327 394
- US-A- 5 062 782
- US-A- 5 069 850
- US-A1- 2002 043 329

## Beschreibung

Die Erfindung betrifft einen Ringextruder gemäß dem Oberbegriff von Anspruch 1.

Derartige Extruder für die Extrusion von Kautschukmischungen, bei denen Festigkeitsträger umhüllt werden, sind seit längerem bekannt. Typischerweise werden die Festigkeitsträger von der seitlich zugeführten Extrusionsmasse, die beispielsweise eine Kautschukmischung sein kann, umhüllt und durchtreten dann gemeinsam mit der Extrusionsmasse die Extrusiondüse. Nachteilig hierbei ist es, dass die genaue Lage der Festigkeitsträger nicht kontrolliert werden kann, so dass die erwünschte Zentrallage häufig nicht eingehalten werden kann. Dies gilt insbesondere, wenn die Festigkeitsträger eher biegeschlaff sind.

Für derartige Festigkeitsträger ist es auch bekannt geworden, die Extrusion in zwei Schritten vorzunehmen, wobei zunächst eine Primärlage mit den Festigkeitsträgern versehen wird, die dann erst in einem zweiten Schritt vollständig umhüllt werden. Ein Beispiel für eine derartige Lösung ist aus der DE 10 2005 044 988 ersichtlich.

Bei dieser Lösung ist jedoch ein vergleichweise aufwändiges Doppelextrusionsverfahren erforderlich, so dass nicht verwunderlich ist, dass sich diese Lösung nicht durchgesetzt hat.

Die Qualität von Extrusionsprodukten - gerade wenn Einlagen wie Festigkeitsträger verwendet werden - hängt in starkem Masse von dem Extrusionsdruck ab. Bahnen werden typischerweise über Extrusionsköpfe extrudiert, deren Extrusionsdüse schlitzförmig ist. Bei geringer Bahnstärke und großer Bahnbreite entsteht gerade in der Mitte des Düsenspalts ein erhebliches Biegemoment, dem nur Rechnung getragen werden kann, wenn die Extrusionsdüse innen praktisch eine Art Spannrippe aufweist, die von der zu extrudierenden Masse umströmt wird. Dies ist unproblematisch, wenn keine Einlagen oder Festigkeitsträger mitextrudiert werden. Wenn dies jedoch der Fall ist, stört eine entsprechende Spannrippe die freie Extrusion, so dass auf die Spannrippe verzichtet werden muss.

Die EP-A-0 472 864 offenbart einen Ringextruder für die Extrusion einer Masse zusammen mit Festigkeitsträgern, die in im Wesentlichen ringförmigen Führungskanäle geführt werden. Die Führungskanäle sind von einer Trennhülse abgedeckt, wobei radial außerhalb dieser ein Ringkanal gebildet ist, in dessen axialer Verlängerung ein Festigkeitsträger-Benetzungsbereich vorgesehen ist.

Die US-A-5 069 850 offenbart einen Koextruder zum Verändern des Aussenprofils eines generell rohrförmigen Extrudats. Es wird mit diesem bekannten Extruder eine genau gesteuerte Anbringung einer äußeren Schicht eines elastomeren Materials auf die Fläche eines kontinuierlich hergestellten, rohrförmigen Extrudats angebracht, wobei ein glatter, ansteigender Anfang und Abschnitt der äußeren Schicht mit dem Extrudat versehen ist.

Der Erfindung liegt demgegenüber die Aufgabe zugrunde, einen Ringextruder gemäß dem Oberbegriff von Anspruch 1 zu schaffen, der auch für hohe Drücke geeignet ist und in der Lage ist, Festigkeitsträger zusammen mit der Extrusionsmasse störungsfrei zu extrudieren.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass ein Ringextruder verwendet wird, der die breite Bahn auch mit hohen Extrusionsdrücken von mehr als 300 bar, beispielsweise also von 500 oder 600 bar extrudieren kann, ohne dass eine besonders schwere Konstruktion erforderlich wäre. Dies liegt an der "Selbstabstützung" der Ringform. Durch den Innendruck wird der kreisringförmige Extruderkopf unter Zugspannung gesetzt, wobei die Zugfestigkeit beispielsweise von Stahl typischer Weise erheblich größer als die Biegefestigkeit ist, der ein entsprechender Extrusionskopf bei Realisierung einer Breitschlitzdüse ausgesetzt wäre.

Erfindungsgemäß können daher Spannrippen entfallen, so dass Festigkeitsträger frei extrudierbar sind und keine Beschränkungen hinsichtlich der Anordnung bestehen.

Die Wahl der Lage und der genauen Anordnung der Festigkeitsträger lässt sich erfindungsgemäß durch die Realisierung von Förderschuhen bestimmen, die bevorzugt als auswechselbare Einsätze gehalten sind. Hierzu ist erfindungsgemäß eine Trennhülse vorgesehen, die als radiale Innenwand für einen Ringkanal dient, über welche achsparallel die zu extrudierende Masse einem Einbettungsbereich für die Festigkeitsträger zugeführt wird. Die Trennhülse ist bevorzugt in axialer Richtung entfernbar, so dass die Förderschuhe freigelegt werden können und die Festigkeitsträger nach Wahl des Benutzers eingelegt werden können. Hierzu weisen die Festigkeitsträger-Förderschuhe bevorzugt radial nach außen weisende offene Kanäle auf, die im Wesentlichen U-förmig sind und in ihrer Form an die Form der Festigkeitsträger angepasst sein können.

Nach Entfernen des Extruderdorns aus der Extruderhülse oder dem Extruderkopf, bevorzugt nach hinten, lässt sich auch die Trennhülse abschieben und die Förderschuh-Kanäle liegen offen. In dieser Position ist auch ohne weiteres eine Reinigung des Extruders möglich.

Ein weiterer besonderer Vorteil der Trennhülsen-Anordnung liegt darin begründet, dass man eine derartige Trennhülse ausgesprochen flach bauen kann, so dass der Ringkanal eine koaxiale Strömung der zu extrudierenden Masse bietet. Die radiale Komponente bei der Einbettung der Festigkeitsträger in die zu extrudierende Masse ist dann vernachlässigbar, zumal auch die entsprechende Vertiefung in dem Extruderdorn, die den Einbettungsbereich bildet, einen achsparallelen Boden aufweisen kann, der der achsparallelen Strömung der zu extrudierenden Masse in diesem Bereich zugute kommt.

Lediglich eingangsseitig der Vertiefung ist bevorzugt eine recht kurze Schrägfläche der Vertiefung vorgesehen. Gerade dort stützen aber die Festigkeitsträger-Förderschuhe die Festigkeitsträger noch besonders gut ab, so dass die radiale Strömungskomponente dort nicht zur Durchbiegung der Festigkeitsträger führt.

Erfindungsgemäß ist es bevorzugt, die Ausgestaltung der Vertiefung so zu wählen, dass sie deutlich größer als beispielsweise die halbe Materialstärke der zu extrudierenden Bahn ist. Für die intensive Einbettung unter hohem Druck ist es günstig, wenn die zu extrudierende Masse allseitig auf die Festigkeitsträger einwirkt, und zwar mit möglichst gleichem Druck, so dass erfindungsgemäß vor der eigentlichen Extrusionsdüse eine Strömungsberuhigung mit einem vergrößerten Innenraum, der dem Einbettbereich entspricht, vorgesehen ist.

Durch die erfindungsgemäße Anordnung ist eine sichere Zentrallage der Festigkeitsträger gewährleistet. Hierzu ist der Kanal der Förderschuhe so gewählt, dass die Festigkeitsträger in der Höhenmitte des Düsenspalts mitextrudiert werden.

Erfindungsgemäß besonders günstig ist es ferner, dass mit den Förderschuh-Einsätzen den unterschiedlichen Erfordernissen hinsichtlich der Form der Festigkeitsträger Rechnung getragen werden kann. Die Anordnung der Festigkeitsträger, ihre Abmessungen und ihre Anzahl lässt sich so in weiten Bereichen an die Erfordernisse anpassen, wobei es auch möglich ist, mehrere, gegeneinander versetzte Schichten von Festigkeitsträgern über entsprechend ausgebildete Formschuhe mit Kanälen, deren Höhe unterschiedlich ist, zu erzeugen.

Weitere Vorteile, Einzelheiten und Merkmale ergeben sich aus der nachfolgenden Beschreibung eines Ausführungsbeispiels anhand der Zeichnung.

Es zeigen:
- Fig. 1: eine schematische Ansicht eines Schnitts durch den Extruderkopf eines erfindungsgemäßen Extruders in einer Ausführungsform;
- Fig. 2: eine vergrößerte Darstellung eines Details aus Fig. 1;
- Fig. 3: einen Längsschnitt durch einen erfindungsgemäßen Extruderkopf; und
- Fig. 4: eine vergrößerte Darstellung eines Details aus Fig. 3.

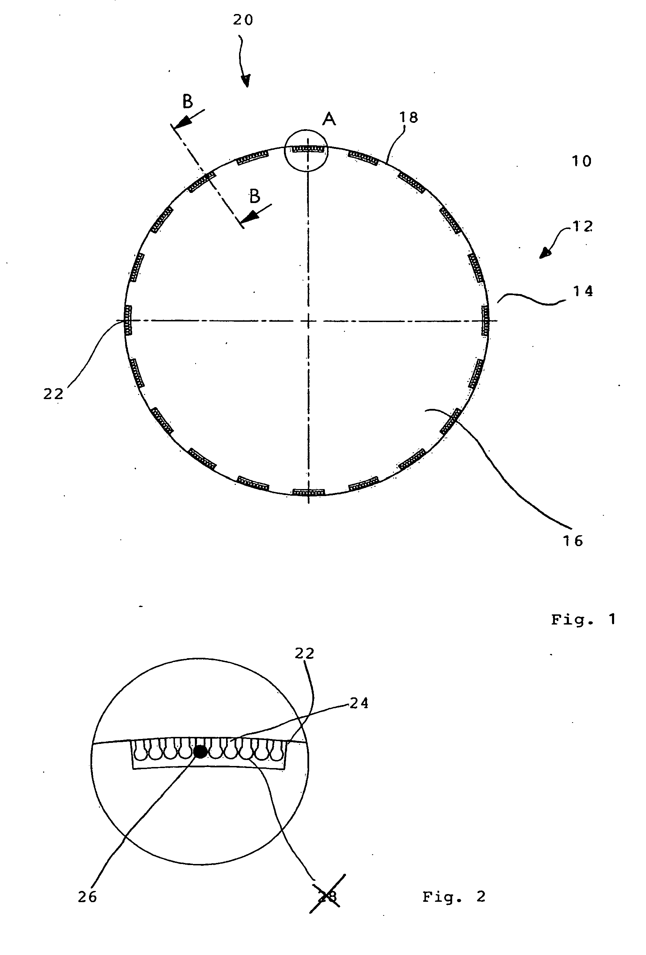

Der in Fig. 1 dargestellte Extruder 10 weist einen Extruderkopf 12 auf, der erfindungsgemäß in besonderer Weise ausgebildet ist. Eine Extruderhülse 14 erstreckt sich um einen Extruderdorn 16. Zwischen diesen besteht ein Dichtspalt 18, der als Extruderdüse 20 wirkt. In Fig. 1 ist ersichtlich, dass sich zahlreiche Förderschuhe 22 oder Festigkeitsträger-Aufnahmen kreisringförming entlang dem Dichtspalt 18 erstrecken. Jeder Förderschuh ist jeweils gemäß der vergrößerten Darstellung in Fig. 2 ausgebildet.

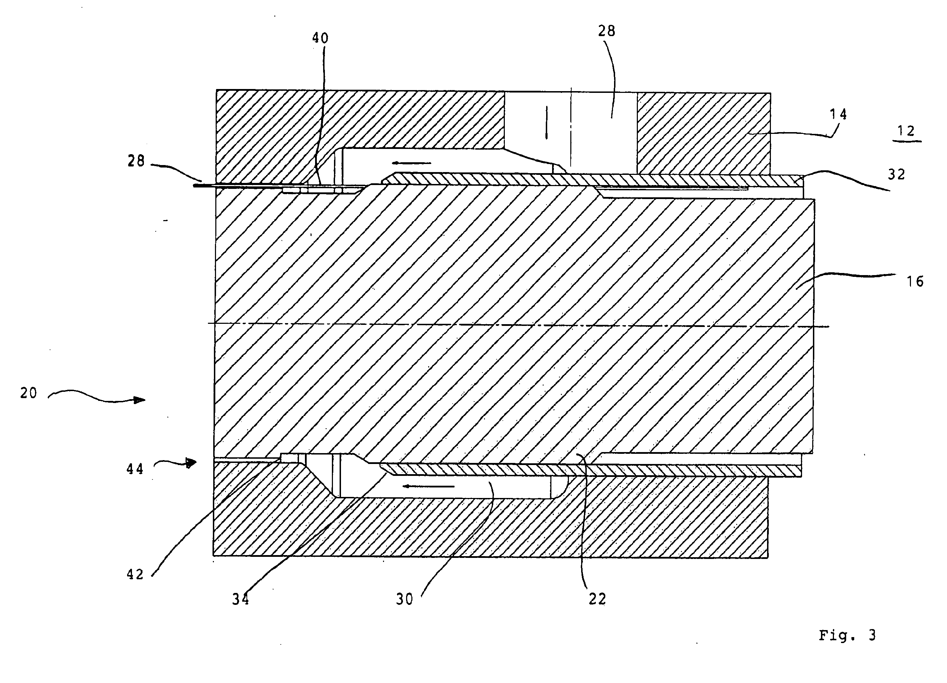

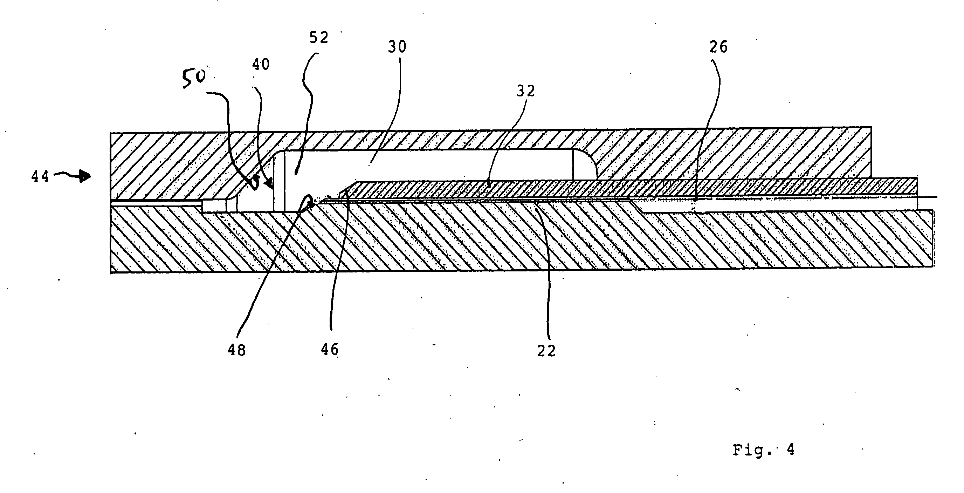

Der Schnitt gemäß Fig. 1 ist im Bereich einer Trennhülse vorgesehen, die aus Fig. 3 und 4 besser ersichtlich ist und die den Ring der Förderschuhe 22 radial nach außen begrenzt. Ein Förderschuh 22 ist aus Fig. 2 in vergrößerter Darstellung ersichtlich. Der Förderschuh weist zahlreiche Führungskanäle 24 auf, die der Aufnahme von Festigkeitsträger dienen, von denen ein Festigkeitsträger 26 in Fig. 2 dargestellt ist. Jeder Kanal ist im Wesentlichen U-förmig mit einer Ausbauchung an seinem unteren Ende. Dort ist der Festigkeitsträger 26 mit ausreichendem Spiel, das eine Forderung erlaubt, aufgenommen.

In dem dargestellten Ausführungsbeispiel sind die Führungskanäle 24 mit ganz geringem Abstand nebeneinander angeordnet. Es versteht sich, dass anstelle dessen auch eine beliebige andere Ausgestaltung möglich ist.

Aus Fig. 3 ist ein erfindungsgemäßer Extrusionskopf 12 im Schnitt ersichtlich. Die zu extrudierende Masse 28 wird seitlich, also aus radialer Richtung zugeführt. Sie durchströmt einen Ringkanal 30, der den Extruderdorn 16 umgibt. Dort ist die Ringanordnung der Förderschuhe 22 von einer Trennhülse 32 abgedeckt. Die Trennhülse 32 umgibt den Dorn 16 einschließlich der Förderschuhe für die Festigkeitsträger und bildet die radial einwärts begrenzende Wand für den Ringkanal 30.

An ihrem vorderen, also stromab liegenden Ende weist die Trennhülse 32 eine Auslaufschräge 34 auf. Die Auslaufschräge dient dazu, die radial einwärts verlaufende Bewegung der zu extrudierenden Masse einzuleiten. Knapp dahinter endet der Förderschuh, und der Extruderdorn 16 weist dort eine Vertiefung 40 auf. Der Festigkeitsträger 26 tritt aus dem Förderschuh 22 frei aus und wird innerhalb der Vertiefung 40 vollständig von der zu extrudierenden Masse 28 umgeben.

Die Vertiefung 40 endet weiter stromab an einer Sperrschulter 42, die einen Ringspalt 44 zu der Extruderhülse 14 belässt, so dass dort die Extrusionsdüse 20 ausgebildet ist. Durch die Extrusionsdüse 20 tritt somit die zu extrudierende Masse 28 zusammen mit den dort eingelagerten Festigkeitsträgern 26 aus.

Diese Realisierung ist aus Fig. 4 in vergrößerter Darstellung ersichtlich, wobei der Einfachheit halber der Festigkeitsträger 26 lediglich gestrichelt angedeutet ist. Es ist ersichtlich, dass im Bereich der Vertiefung 40 der Durchmesser des Ringkanals 30 zunächst vergrößert ist. Dort ensteht insofern eine Strömungsberuhigungszone mit etwas veringerter Strömungsgeschwindigkeit, die eine gute Hüllwirkung für die Festigkeitsträger erlaubt.

Aus Fig. 4 ist auch ersichtlich, dass die Vertiefung sich über eine erhebliche axiale Länge erstreckt, beispielsweise die zehnfache Länge der Stärke des Ringspalts in der Extrusionsdüse. Die Vertiefung 40 hat eine Höhe, die etwa dem doppelten bis dreifachen der Stärke des Ringspalts 44 entspricht.

Noch deutlich länger ist die achsparallele Länge des Ringkanals 30. Sie beträgt beispielsweise die dreifache Länge der Vertiefung, und über nahezu die gesamte Länge des Ringspalts erstreckt sich als radiale Innenwand die Trennhülse 32.

Die Trennhülse 32 weist an ihrem vorderen Ende eine Abschrägung 46 auf, die Material radial nach einwärts leitet. In der Verlängerung der Abschrägung schneidet diese den Formschuh 22, aber etwas weiter nach vorne, also auf die Extrusionsdüse hin, besteht eine weitere Schrägfläche 48 der Vertiefung 40, deren Neigung im Wesentlichen der Neigung der Abschrägung 46 entspricht. In dem dargestellten Ausführungsbeispiel erstrecken sich sowohl die Schrägfläche 48 als auch die Abschrägung 46 in einem Winkel von etwa 30 Grad zur Extruderachse.

Durch die Wirkung dieser Schrägflächen wird zwar eine geringe radiale Komponente der Bewegung in die zu extrudierende Masse eingeleitet. Dort ist jedoch die Abstützung auf dem Förderschuh 22 besonders gut, so dass dies die freie Lage der Festigkeitsträger in der Vertiefung 40 nicht beeinträchtigt.

Der Schrägfläche 48 gegenüberliegend radial nach außen, aber auch axial zum Ringspalt 44 hin versetzt, ist eine Schrägfläche 50 vorgesehen, die im Extrusionskopf vorgesehen ist und den vergrößerten Einbettungsbereich 52 des erfindungsgemäßen Ringextruders nach vorne und nach außen begrenzt.

## Patentansprüche

1. Ringextruder für die Extrusion einer Masse (28), insbesondere einer Kautschukmischung, zusammen mit Festigkeitsträgern (26), wobei Förderschuhe (22) für die Festigkeitsträger (26) im Wesentlichen ringförmig angeordnet und von einer Trennhülse (32) abgedeckt sind, wobei radial außerhalb dieser ein Ringkanal (30) gebildet ist, in dessen axialer Verlängerung ein Festigkeitsträger-Benetzungsbereich vorgesehen ist, wobei der Ringextruder (10) einen Extruderdorn (16) aufweist, **dadurch gekennzeichnet, dass** der Extruderdorn eine Vertiefung aufweist, deren Boden radial innerhalb der Ebene der Festigkeitsträger (26) verläuft, und wobei die Vertiefung einen Einbettungsbereich festlegt, in welchem die Festigkeitsträger (26) von der zu extrudierenden Masse (28) umhüllt werden, während die Masse (28) sich in axialer Richtung bewegt.

2. Ringextruder nach Anspruch 1,
**dadurch gekennzeichnet, dass** die Förderschuhe (22) für die Festigkeitsträger (26) von außen von der Trennhülse (32) abgedeckt sind.

3. Ringextruder nach Anspruch 1 oder 2,
**dadurch gekennzeichnet, dass** der Ringextruder (10) aus einem Extruderkopf (12) und dem Extruderdorn (16) aufgebaut ist, zwischen denen sich eine Extrusionsdüse (20) erstreckt, und in deren Verlängerung sich die Trennhülse (32) erstreckt.

4. Ringextruder nach einem der vorhergehenden Ansprüche,
**dadurch gekennzeichnet, dass** die Trennhülse (32) gegenüber dem Extruderdorn (16) axial beweglich ist und die Förderschuhe (22) Führungskanäle (24) aufweisen, die radial nach außen offen sind.

5. Ringextruder nach einem der vorhergehenden Ansprüche,
**dadurch gekennzeichnet, dass** eine Trennhülse (32) relativ zu dem Extruderdorn (16) koaxial gelagert ist.

6. Ringextruder nach einem der vorhergehenden Ansprüche,
**dadurch gekennzeichnet, dass** die Trennhülse (32) gegenüber dem Extruderdorn (16) verschieblich ist, insbesondere in einer Richtung parallel zur Extrusionsrichtung.

7. Ringextruder nach einem der vorhergehenden Ansprüche,
**dadurch gekennzeichnet, dass** die Förderschuhe (22) für die Aufnahme von Festigkeitsträgern (26) radial nach außen offene Kanäle aufweisen, die von der Trennhülse (32) verschließbar sind.

8. Ringextruder nach einem der vorhergehenden Ansprüche,
**dadurch gekennzeichnet, dass** die Trennhülse (32) an ihrem der Extrusionsdüse (20) zugewandten Ende eine Abschrägung oder Abrundung aufweist, die sich nach der Art eines Außenkonus erstreckt.

9. Ringextruder nach einem der vorhergehenden Ansprüche,
**dadurch gekennzeichnet, dass** der Extrusionsdom (16) eine Vertiefung aufweist, deren Boden sich über die achsparallele Länge über mindestens 80, bevorzugt über mindestens 90 Prozent der Länge der Vertiefung auf der gleichen radialen Höhe erstreckt.

10. Ringextruder nach einem der vorhergehenden Ansprüche,
**dadurch gekennzeichnet, dass** eine Vertiefung im Extruderdorn (16) angrenzend an die Förderschuhe (22) für die Festigkeitsträger (26) eine Schrägfläche aufweist, deren Neigung weniger als 60 Grad zur Achse des Extruders (10) beträgt, insbesondere weniger als 45 Grad und bevorzugt etwa 30 Grad.

11. Ringextruder nach einem der vorhergehenden Ansprüche,
**dadurch gekennzeichnet, dass** der Extruderdorn (16) eine Vertiefung aufweist, die sich in Strömungsrichtung an die Förderschuhe (22) für die Festigkeitsträger (26) anschließt und deren radiale Tiefe größer als die Stärke des Ringspalts der Extrusionsdüse (20) ist, insbesondere etwa doppelt so groß.

12. Ringextruder nach einem der vorhergehenden Ansprüche,
**dadurch gekennzeichnet, dass** einer Vertiefung des Extruderdoms (16) einer Schrägfläche des Ringkanals (30) gegenüber liegt, die sich etwa in der axialen Mitte der Vertiefung erstreckt und deren Schrägstellungswinkel insbesondere mehr als 30° und weniger als 60° und bevorzugt etwa 45° beträgt.

13. Ringextruder nach einem der vorhergehenden Ansprüche,
**dadurch gekennzeichnet, dass** die Festigkeitsträger (26) in Förderschuhen (22) geführt sind, die insbesondere als herausnehmbare Einsätze ausgebildet sind.

14. Ringextruder nach einem der vorhergehenden Ansprüche,
**dadurch gekennzeichnet, dass** jeder Förderschuh (22) mindestens 4, bevorzugt etwa 7 bis 15 und insbesondere etwa 10 Kanäle für die Aufnahme von Festigkeitsträgern (26) aufweist.

15. Ringextruder nach einem der vorhergehenden Ansprüche,
**dadurch gekennzeichnet, dass** die Festigkeitsträger (26) in tangentialer Richtung der Extrusiondüse (20) betrachtet von einander deutlich beabstandet sind, insbesondere um etwas mehr als die Hälfte ihrer tangentialen Breite.

16. Ringextruder nach einem der vorhergehenden Ansprüche,
**dadurch gekennzeichnet, dass** der bei der Extrusion mitlaufende Festigkeitsträger (26) in der Extrusiondüse (20) vollständig in Extrusionsmasse (28) eingebettet ist.

17. Ringextruder nach einem der vorhergehenden Ansprüche,
**dadurch gekennzeichnet, dass** die Festigkeitsträger (26) sich im Wesentlichen parallel zur Achse der Extrusionsdüse (20) erstrecken und diese im Wesentlichen kreisringförmig umgeben.

## Claims

1. A ring extruder for the extrusion of a compound (28), in particular a rubber mixture, together with reinforcing members (26), wherein conveying shoes (22) for the reinforcing members (26) are substantially arranged in an annular manner and are covered by a separating sleeve (32), wherein radially outside thereof an annular channel (30) is formed, in the axial extension thereof a reinforcing member wetting or deposition region is provided, wherein the ring extruder (10) comprises an extruder mandrel (16), **characterized in that** the extruder mandrel (16) comprises a recess, whose bottom extends radially within the plane of the reinforcing members (26), and wherein the recess determines an embedding area, in which the reinforcing members (26) are enclosed or surrounded by the compound (28) that is to be extruded, whereas the compound (28) moves in the axial direction.

2. The ring extruder as claimed in claim 1, **characterized in that** the conveying shoes (22) for the reinforcing members (26) are covered by the separating sleeve (32) from outside.

3. The ring extruder as claimed in claim 1 or 2, **characterized in that** the ring extruder (10) is built up from an extruder head (12) and the extruder mandrel (16), between which an extrusion nozzle (20) extends, and in the extension thereof the separating sleeve (32) extends.

4. The ring extruder as claimed in one of the preceding claims, **characterized in that** the separating sleeve (32) is axially movable relative to the extruder mandrel (16) and that the conveying shoes (22) comprise guide channels (24) that are open radially towards the outside.

5. The ring extruder as claimed in one of the preceding claims, **characterized in that** the separating sleeve (32) is coaxially mounted relative to the extruder mandrel (16).

6. The ring extruder as claimed in one of the preceding claims, **characterized in that** the separating sleeve (32) is slidable relative to the extruder mandrel (16), in particular in a direction parallel to the extrusion direction.

7. The ring extruder as claimed in one of the preceding claims, **characterized in that** the conveying shoes (22) comprise channels that are open radially towards the outside for receiving the reinforcing members (26), wherein said channels may be closed by means of the separating sleeve (32).

8. The ring extruder as claimed in one of the preceding claims, **characterized in that** the separating sleeve (32) comprises a chamfer or rounding at the end thereof facing the extrusion nozzle (20), said chamfer or rounding extending in the manner of an outer cone.

9. The ring extruder as claimed in one of the preceding claims, **characterized in that** the extruder mandrel (16) comprises a recess, whose bottom in the axially parallel length extends over at least 80%, preferably at least 90% of the length of the recess at the same radial height.

10. The ring extruder as claimed in one of the preceding claims, **characterized in that** a recess in the extruder mandrel (16) adjacent to the conveying shoes (22) for the reinforcing members (26) comprises an inclined surface whose inclination amounts to less than 60 degrees relative to the axis of the extruder (10), in particular to less than 45 degrees and preferably approximately to 30 degrees.

11. The ring extruder as claimed in one of the preceding claims, **characterized in that** the extruder mandrel (16) comprises a recess that joins on to the conveying shoes (22) for the reinforcing members (26) in the flow direction and whose radial depth is larger than the thickness of the annular gap of the extrusion nozzle (20), in particular is twice as large.

12. The ring extruder as claimed in one of the preceding claims, **characterized in that** a recess of the extruder mandrel (16) is arranged opposite to an inclined surface of the annular channel (30), said inclined surface approximately extending in the axial centre of the recess and having an angle of inclination that in particular is more than 30° and less than 60° and preferably approximately 45°.

13. The ring extruder as claimed in one of the preceding claims, **characterized in that** the reinforcing members (26) are guided within conveying shoes (22) that in particular are formed as removabe inserts.

14. The ring extruder as claimed in one of the preceding claims, **characterized in that** each conveying shoe (22) comprises at least 4, preferably about 7 to 15, and in particular about 10 channels for the receipt or storage of reinforcing members (26).

15. The ring extruder as claimed in one of the preceding claims, **characterized in that** the reinforcing members (26), when viewed in the tangential direction of the extrusion nozzle (20), are clearly disposed at a distance from one another, in particular somewhat more than half of the tangential width thereof.

16. The ring extruder as claimed in one of the preceding claims, **characterized in that** reinforcing members (26) entrained or moved along during the extrusion in the extrusion nozzle (20) are completely embedded in extrusion compound (28).

17. The ring extruder as claimed in one of the preceding claims, **characterized in that** the reinforcing members (26) substantially extend in parallel to the axis of the extrusion nozzle (20) and surround it in a substantially annular manner.

## Revendications

1. Extrudeuse en anneau pour l'extrusion d'une masse (28), de préférence un mélange de caoutchoucs, ensemble avec des supports de fermeté (26), où des coussinets de transport (22) pour les supports de fermeté (26) sont disposés essentiellement en anneau et couverts d'une douille de séparation (32), où à l'extérieur de celle-ci un canal annulaire (30) est formé, dans la prolongation axiale duquel un secteur d'humectation des supports de fermeté est prévu, où l'extrudeuse en anneau (10) présente un mandrin d'extrudeuse (16), **caractérisée en ce que** le mandrin d'extrudeuse présente un approfondissement dont le fond passe radialement à l'intérieur du plan des supports de fermeté (26), et où l'approfondissement délimite un secteur d'encastrement, dans lequel les supports de fermeté (26) sont enveloppés par la masse à extruder (28), pendant que la masse (28) avance en direction axiale.

2. Extrudeuse en anneau selon la revendication 1, **caractérisée en ce que** les coussinets de transport (22) pour les supports de fermeté (26) sont couverts de l'extérieur par la douille de séparation (32).

3. Extrudeuse en anneau selon l'une des revendications 1 ou 2, **caractérisée en ce que** l'extrudeuse en anneau (10) est formée par un pot d'extrudeuse (12) et du mandrin d'extrudeuse (16), entre lesquelles s'étend une filière d'extrudeuse (20), et dans la prolongation desquels s'étend la douille de séparation (32).

4. Extrudeuse en anneau selon l'une des revendications précédentes, **caractérisée en ce que** la douille de séparation (32) est axialement mobile par rapport à la douille d'extrudeuse (16) et les coussinets de transport (22) présentent des canaux de guidage (24) qui sont radialement ouverts à l'extérieur.

5. Extrudeuse en anneau selon l'une des revendications précédentes, **caractérisée en ce qu'**une douille de séparation (32) est logée coaxialement par rapport au mandrin d'extrudeuse (16).

6. Extrudeuse en anneau selon l'une des revendications précédentes, **caractérisée en ce que** la douille de séparation est déplaçable (32) par rapport au mandrin d'extrudeuse (16), de préférence dans une direction parallèle au sens d'extrusion.

7. Extrudeuse en anneau selon l'une des revendications précédentes, **caractérisée en ce que** les coussinets de transport (22) pour l'accueil des supports de fermeté (26) présentent radialement des canaux ouverts à l'extérieur qui sont verrouillables de la douille de séparation (32).

8. Extrudeuse en anneau selon l'une des revendications précédentes, **caractérisée en ce que** la douille de séparation (32) présente à son extrémité (20) tournée vers la filière d'extrudeuse un chanfreinage ou un arrondissement, qui s'étend à la manière d'un cône extérieur.

9. Extrudeuse en anneau selon l'une des revendications précédentes, **caractérisée en ce que** la douille d'extrudeuse (16) présente un approfondissement dont le fond s'étend sur la longueur parallèle à l'axe sur au moins 80, de préférence sur au moins 90 pour cent, de la longueur de l'approfondissement sur la même hauteur radiale.

10. Extrudeuse en anneau selon l'une des revendications précédentes, **caractérisée en ce qu'**un approfondissement dans le mandrin d'extrudeuse (16) contigu aux coussinets de transport (22) présente une surface d'écriture pour les supports de fermeté (26), dont l'angle d'inclinaison est inférieur à 60 degrés par rapport à l'axe de l'extrudeuse (10), en particulier moins de 45 degrés et préférence environ 30 degrés.

11. Extrudeuse en anneau selon l'une des revendications précédentes, **caractérisée en ce que** le mandrin d'extrudeuse (16) présente un approfondissement qui est attaché aux coussinets de transport (22) pour les supports de fermeté (26) dans le sens de l'écoulement et dont la profondeur radiale est supérieure à l'épaisseur du passage annulaire de la filière d'extrudeuse (20), de préférence environ le double.

12. Extrudeuse en anneau selon l'une des revendications précédentes, **caractérisée en ce qu'**un approfondissement de la douille d'extrudeuse (16) se trouve en face d'une surface inclinée du canal annulaire (30) qui s'étend par exemple dans le centre axial de l'approfondissement et son angle d'inclinaison s'élève en particulier à plus de 60' et moins de 30' et de préférence environ 45.

13. Extrudeuse en anneau selon l'une des revendications précédentes, **caractérisée en ce que** les supports de fermeté (26) sont conduits dans les coussinets de transport (22) qui sont formées de préférence comme inserts amovibles.

14. Extrudeuse en anneau selon l'une des revendications précédentes, **caractérisée en ce que** chaque coussinet de transport (22) présente au moins 4, de préférence environ 7 à 15 et en particulier environ 10 canaux pour l'accueil des supports de fermeté (26).

15. Extrudeuse en anneau selon l'une des revendications précédentes, **caractérisée en ce que** dans la direction tangentielle de la filière d'extrusion (20) les supports de fermeté (26) sont clairement distancés les uns par rapport aux autres, de préférence par légèrement plus de la moitié de leur largeur tangentielle.

16. Extrudeuse en anneau selon l'une des revendications précédentes, **caractérisée en ce que** le support de fermeté (26), transporté lors de l'extrusion, est incorporé dans la filière d'extrusion (20) dans la matière d'extrusion.

17. Extrudeuse en anneau selon l'une des revendications précédentes, **caractérisée en ce que** les supports de fermeté (26) s'étendent essentiellement parallèle à l'axe de la filière d'extrusion (20) et entourent celle-ci essentiellement sous forme d'anneau circulaire.
